# EUROPEAN PATENT SPECIFICATION

(11) **EP 3 769 626 B1**
(45) Date of publication and mention of the grant of the patent: **24.12.2025**
(21) Application number: 20183617.8
(22) Date of filing: 02.07.2020
(51) Int. Cl.: A23C 9/142, B01D 61/14, B01D 63/10

(54) **SYSTEM AND METHOD FOR CONCENTRATING A SUBSTANCE IN A MILK PRODUCT**
SYSTEM UND VERFAHREN ZUM KONZENTRIEREN EINER SUBSTANZ IN EINEM MILCHPRODUKT
SYSTÈME ET PROCÉDÉ POUR CONCENTRER UNE SUBSTANCE DANS UN PRODUIT LAITIER

(30) Priority: 24.07.2019 EP 19188143
(43) Date of publication of application: 27.01.2021
(73) Proprietor: Tetra Laval Holdings & Finance S.A., 1009 Pully (CH)
(72) Inventor: Stenholt, Jan, 8643 Ans by (DK); Krogsgaard Sorensen, Henrik, 8800 Viborg (DK); Nissen, Orla, 8600 Silkeborg (DK)
(74) Representative: Tetra Pak Patent Attorneys

(56) References cited:
- EP-A1- 1 466 923
- EP-A1- 3 012 012
- EP-A1- 3 105 308
- EP-A2- 2 641 652
- EP-A2- 3 425 368
- EP-B1- 2 547 215
- EP-B1- 3 105 308
- WO-A1-2011/051557
- DE-A1- 102006 053 017
- US-A1- 2009 217 777
- US-A1- 2017 157 566
- DATABASE GNPD [online] MINTEL; July 2009 (2009-07-01), XP002796906, Database accession no. 1142325

## Description

### Technical Field

The invention relates to the field of milk product processing. More particularly, the invention relates to concentrating a substance in a milk product by filtering.

### Background Art

Today, it is common practice to use filtering devices to filtrate a milk product into different sub-products. To avoid that filtering devices are dried out, these are not made drainable. Instead, the filtering devices are filled with water when not used for production or cleaned to assure that they are not damaged or negatively affected in other ways. Examples of filtration techniques are disclosed in patent documents EP3105308B1 and EP254725B1, the latter forming the basis for the preamble of the independent claims.

A drawback with today's filtering devices is that the milk product may be left in the device after production instead of being recovered. This is especially a disadvantage when the sub-products that are produced have a high price per weight or volume unit.

For this reason, there is a demand for a system that is capable of recovering milk product left in the filtering devices from production without challenging the durability of the filtering devices.

### Summary

It is an object of the invention to at least partly overcome one or more of the above-identified limitations of the prior art. In particular, it is an object to provide a method and a system for efficiently concentrating a substance in a milk product while making sure that loss of the substance is reduced.

According to a first aspect, it is therefore provided a method for concentrating a substance in a milk product according to appended claim 1.

The method further comprises after stopping the repeating: opening an air valve to let in air in the filtering device, which is arranged such that milk product held in the filtering device is emptied by gravitational force when the air flows into the filtering device; and collecting the milk product emptied from the filtering device.

The method may further comprise letting the air: enter a section of a first fluid line that is arranged for the feeding of the milk product to the filtering device; and enter a section of a third fluid line that is arranged for the feeding of the second part of the retentate to the tank, such that milk product held in said sections are emptied by gravitational force when the air flows into said sections. Thereafter the milk product emptied from said sections is collected.

The method may further comprise, after stopping the repeating: feeding a part of the permeate into the filtering device, such that milk product held in the filtering device is pushed out by the permeate when the permeate flows into the filtering device; and collecting the milk product pushed out from the filtering device.

The first part of the retentate may comprise 70-90% of the retentate that is filtered in the filtering device.

The filtering device may comprise a spiral wound membrane filter.

The filtering device may be, as seen relatively a direction from a milk product inlet of the filtering device to a retentate outlet of the filtering device, inclined by an angle of: at least 30° relatively the horizontal direction; or at least 45° relatively the horizontal direction.

The filtering device may be, as seen relatively a longitudinal direction of the filtering device, inclined by an angle of: at least 30° relatively the horizontal direction; or at least 45° relatively the horizontal direction.

The method may further comprise feeding, via a fourth fluid line, the permeate to a balance tank or to a drain.

The substance may be Lactoferrin.

According to a second aspect, it is provided a system according to claim 10, which system is configured to concentrate a substance in a milk product.

The filtering device may be, as seen relatively a direction from a milk product inlet of the filter device to a retentate outlet of the filter device, inclined by an angle of: at least 30° relatively the horizontal direction; or at least 45° relatively the horizontal direction.

The filtering device may be, as seen relatively a longitudinal direction of the filter arrangement, inclined by an angle of: at least 30° relatively the horizontal direction; or at least 45° relatively the horizontal direction.

### Brief Description of the Drawings

Embodiments of the invention will now be described, by way of example, with reference to the accompanying schematic drawings, in which
Fig 1 illustrates a system for concentrating a milk product,
Fig. 2a is a flow chart illustrating the system of Fig 1 in a production mode,
Fig. 2b is a flow chart illustrating the system of Fig 1 in a first draining mode,
Fig. 2c is a flow chart illustrating the system of Fig 1 in a second draining mode, and
Fig. 3 is a flow chart illustrating a method for concentrating a milk product.

### Detailed Description

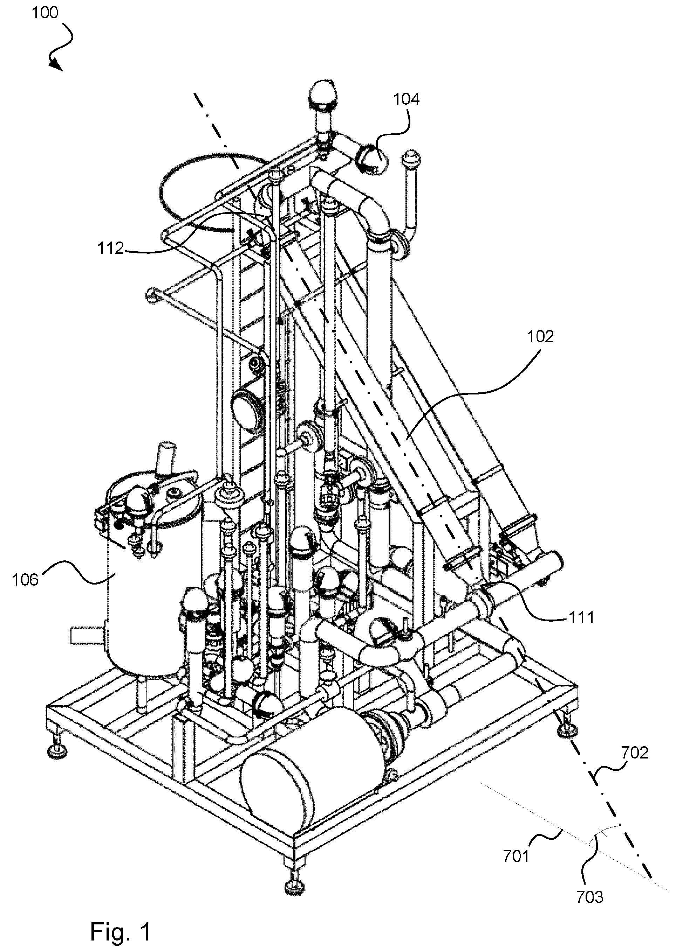

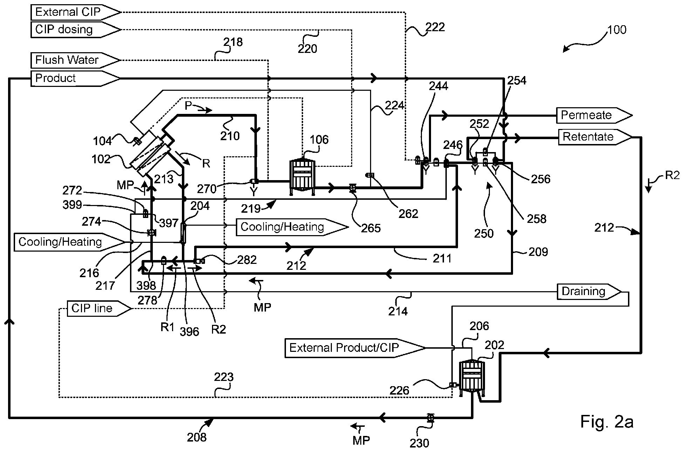

With reference to Figs 1 and 2a, a system 100 arranged for concentrating a substance in a milk product MP is illustrated by way of example. The system 100 is be arranged to concentrate a substance in a milk product MP by using a filtering device 102 arranged in the system 100. The filtering device 102 comprises a milk product inlet 111 and an retentate outlet 112. The filtering device 102 is arranged to filter the milk product MP into a permeate P and a retentate R. The retentate R comprises a concentration of the substance. By way of example, the substance may be Lactoferrin.

As illustrated, the filtering device 102 is elongated and is arranged in a direction 702 that extends from the milk product MP inlet 111 to the retentate outlet 112. To provide for that liquid, such as the milk product MP, can be easily and efficiently drained from the filtering device 102 the direction 702 can be inclined with respect to a horizontal direction 701. An angle 703 between the direction 702 and the horizontal direction 701 may be at least 30° or may be at least 45°. In some embodiments the direction 702 is parallel to the horizontal direction 701.

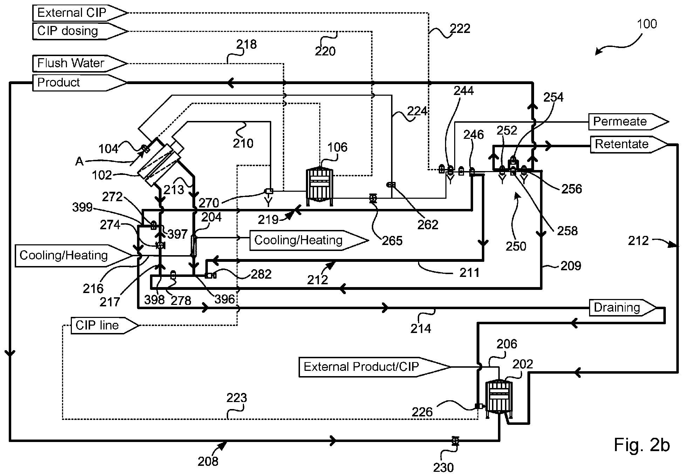

In line with what is described above, by having the filtering device 102 arranged in this way, it is possible to empty milk product MP that is held in the filtering device 102, after the system 100 has been stopped, by using gravitational force. In other words, the filtering device 102 may be drained by using the gravitational force. Different ways of draining the system 100 will be discussed more in detail below with reference to Figs. 2b-c.

The principles and concepts described herein may be applied to different kinds of filtering devices. By way of example, the filtering device 102 may be a conventional membrane filtering device. The filtering device 102 may be a spiral wound membrane filtering device. The membrane filtering device may comprise one or more membrane elements, wherein each membrane element may comprise two or more membrane layers. Two membrane layers may be separated by a porous layer. The porous layer can be made of a porous permeate conductive material. The membrane filter can be rolled around a collection tube to form the filtering device 102. During the membrane filtration, the permeate P can spiral to the collection tube, and the retentate R can be fed through the filtering device 102. In other embodiments the filtering device 102 may use other filtering techniques.

The system 100 comprises an air valve 104. The air valve 104 may be arranged to let in air A (see Fig. 2b) into the filtering device 102 such that the air A can flow through the filtering device 102 into fluid lines arranged that belong to the system 100. Letting in the air A may be done when draining the system 100 and cooperates with the gravitational force to empty the filtering device 102.

The system 100 may also comprise a balance tank 106. The balance tank 106 may be arranged to collect the permeate P which is filtered out in the filtering device 102.

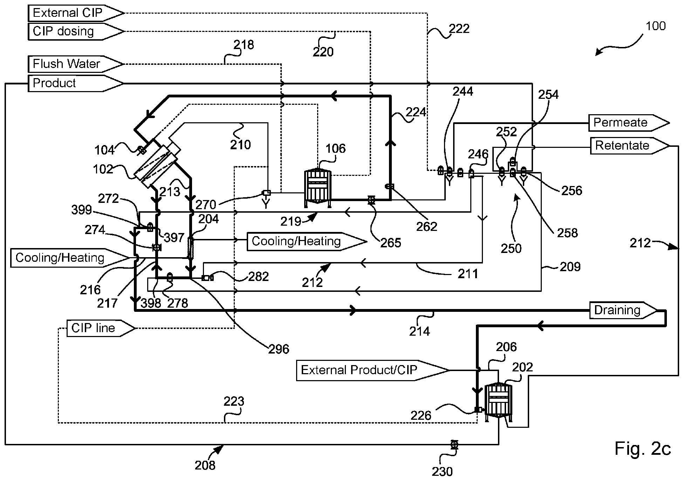

With reference to Figs. 2a-c, a flow chart of the system 100 for concentrating the substance in the milk product MP is illustrated by way of example. In Figs. 2a-c, three different modes of the system 100 is illustrated. In Fig. 2a, a production mode of the system 100 is illustrated. In Fig. 2b, a first draining mode of the system 100 is illustrated in which air is introduced for enabling draining. In Fig. 2c, a second draining mode of the system 100 is illustrated in which the permeate is used for draining. These illustrations are examples of different modes of the system 100 and the system 100 is not limited to these modes. The modes may be used subsequently, but also separately. For illustrative purposes, the thick lines in respective figure illustrate the lines in the system where a flow is present during respective mode. The system 100 illustrated in the Figs. 2a-c represents an example of the system 100 discussed in connection with Fig 1. Each mode will be discussed more in detail below.

In Fig. 2a, an example of the production mode of the system 100 is illustrated. In the production mode, the system 100 is arranged to concentrate the substance in the milk product MP by filtering the milk product MP into the permeate P and the retentate R.

The milk product MP can be fed into the system 100 via an external product line 206. The external product line 206 may feed the milk product MP into a tank 202, wherein the tank 202 may be arranged as a part of the system 100. The milk product MP comprises the substance that shall be concentrated. When initially fed into the system 100 the milk product MP has a normal concentration of the substance, i.e. the concentration that is naturally present in the milk product MP. The milk product MP may be milk, which may have been heat treated or processed in other ways prior to being fed to the tank 202.

From the tank 202 the milk product MP may be fed to the filtering device 102 via a first fluid line 208. In order for the system 100 to feed the milk product MP to the filtering device 102, a first pump 230 may be arranged in the first fluid line 208.

To regulate a flow rate of the milk product MP in the system 100, a valve battery 250 may be provided in the first fluid line 208. The valve battery 250 may be placed at a location of the system 100 that is vertically above a drain outlet for the substance to be concentrated, such that the system 100 may be adequately emptied. According to Figs 2a-c, the valve battery 250 comprises four valves, a first valve 252, a second valve 254, a third valve 256 and a fourth valve 258. In the production mode, the first valve 252 and the third valve 256 may be open and the second valve 254 and the fourth valve 258 may be closed. The third valve 256 may be arranged to regulate the flow rate of the milk product MP that is fed to the filtering device 102. The first valve 252 may be arranged to regulate the flow rate of the milk product MP that is fed from the filtering device 102 and back to the tank 202. The system 100 is not limited to have a valve battery comprising four valves but can comprise another suitable number of valves.

In the production mode, downstream the valve battery 250, the milk product MP passes a first connection point 398. The first connection point 398 may be arranged to feed the milk product MP to a second fluid line 217. A second pump 274 may be arranged in the second fluid line 217 to feed the milk product MP to the filtering device 102. As stated above, the filtering device 102 is arranged to filter the milk product MP into the permeate P and the retentate R. The filtering device 102 per se may be a conventional membrane filter.

The permeate P filtered by the filtering device 102 is fed into a fluid line referred to as a fourth fluid line 210. The fourth fluid line 210 is this arranged to feed the permeate P from the filtering device 102. The permeate P may be fed to the balance tank 106. In order to regulate the flow rate of the permeate P fed to the balance tank 106, a fifth valve 270 may be provided in the fourth fluid line 210. The fifth valve 270 is arranged to also be able to feed the permeate P to a drain.

From the balance tank 106, the permeate P may be fed to an external permeate tank (not illustrated). In order to feed the permeate P from the external permeate tank, a third pump 264 may be arranged in the fourth fluid line 210. In order to regulate the flow rate of the permeate P, a sixth valve 244 may be provided in the fourth fluid line 210.

From the filtering device 102, the retentate R may be fed into a fifth fluid line 213. In order to heat or cool the retentate R, a heating/cooling exchanger 204 may be arranged in the fifth fluid line 213. A heating/cooling medium may be fed into a heating/cooling fluid line 216 in order to give the retentate R a temperature that is optimal for filtration. The retentate R is fed to a second connection point 396. The second connection point 396 is arranged to separate the retentate R into a first retentate stream (first part) R1 and a second retentate stream (second part) R2. The first part R1 of the retentate R is fed into the second fluid line 217 via the first connection point 398. The second part R2 of the retentate R is fed into a third fluid line 212.

In this way and since the second fluid line 217 is connected to the filtering device 102, the first part R1 of the retentate R is circulated over the filtering device 102. When fed into the second fluid 217 the first part R1 of the retentate R is combined with the milk product MP that is fed to the filtering device 102 from the tank 202. To regulate the flow rate of the first part R1 of the retentate, a seventh valve 278 may be arranged in the second fluid line 217. The first part R1 of the retentate R may comprise 70-90% of the retentate R that exits the filtering device 102. The first part R1 of the retentate R may be circulated over the filtering device 102 until the concentration of the substance in the milk product MP has reached a predetermined value.

The third fluid line 212 is arranged to feed the second part R2 of the retentate R to the tank 202. Thus, the second part R2 of the retentate R becomes part of the milk product MP that is fed to the filtering device 102. Herein, the retentate R and both its parts are R1 and R2 are all parts of the milk product MP, as they are all mixed together during the described filtering process.

To regulate the flow rate of the second part R2, an eighth valve 282 may be arranged in the third fluid line 212. Further, the flow rate of the second part R2 may be passed through a ninth valve 246 and the first valve 252 as well, both arranged in the third fluid line 212. The ninth valve 246 may be open during the production mode. The second part R2 of the retentate R comprises the part of the retentate that remaining after the first part R1 has been diverted to the filtering device 102, such as 10-30% of the retentate R that exits the filtering device 102.

In order to maintain a constant flow in the system 100, more milk product MP may be added in the system 100 as the permeate P leaves the system 100.

The predetermined value of the concentration of the substance in the milk product to be concentrated may be monitored by means of a suitable sensor and processing unit (not shown), wherein the sensor and processing unit may be arranged as a part of the system 100. The processing unit may be configured to monitor a gradual increase of the concentration of the substance in the milk product MP. The processing unit may be arranged to stop the filtration process and its fluid flows when the concentration of the substance has reached the predetermined value.

In Fig. 2b, an example of a first draining mode of the system 100 is illustrated. In the first draining mode the system 100 is drained by using gravitational force and air A that enters the air inlet 104. The system 100 is typically drained before being cleaned in order to recover remaining milk product MP, which now has the desired concentration of the substance in the milk product (the concentrate). The milk product with the desired substance concentration is typically a high-value product.

Thus, milk product MP left in the system 100 after the production has a high value and it is beneficial to recover it. When the production mode is finalized part of the milk product MP typically remains in fluid lines and/or in the devices of the system 100, especially in the filtering device 102.

To commence draining the air valve 104 is opened. When the air valve 104 is opened, the air A enters the system 100 via the air valve 104. The air valve 104 is connected to an uppermost part of the filtering device 102 and when it is open surrounding air flows into the upper part of the filtering device 102. Then milk product in the filtering device 102 flows into the second fluid line 217. Thus, the air A flows from the air valve 104 through the filtering device 102 and to fluid lines of the system 100. By letting in air into the system 100, the filtering device 102 may be drained. To facilitate the draining, the filtering device 102 is arranged such that it is inclined by the angle 703 explained in connection with Fig. 1. Having the filtering device 102 arranged in this way, the milk product MP held in the filtering device 102 is emptied by letting the air fill space previously occupied by milk product MP. The milk product flows out from the filtering devices and fluid lines due to the gravitational force.

The milk product MP is emptied from the filtering device 102 to the second fluid line 217 via the milk product inlet 111. A third connection point 397 is located in the second fluid line 217. A seventh fluid line 214 is connected between the third connection point 397 and the tank 202. A tenth valve 272 is arranged in the seventh fluid line 214. During draining the tenth valve 272 is open such that drained milk product flows to the tank 202. Milk product MP in the fifth fluid line 213 flows via the heating/cooling exchanger 204, the second connection point 396, the seventh 278 valve, the first connection point 398, the second pump 274 and to the third connection point 397 where the milk product enters the seventh fluid line 214 and continues to the tank 202. The third connection point 397 is located at a position vertically below all components and fluid lines from which milk product is drained to the third connection point 397. The seventh fluid line 214 and the tank 202 may be located below the third connection point 397.

When the filtering device 102 has been drained by allowing air to flow into it, the air eventually flows into a section 209 of the first fluid line 208 that is located between the filter arrangement 102 and the third valve 256. Milk product in the third valve 256 and in section 209 then flows, due to gravity, towards the second connection point 398, past the second pump 274, to the third connection point 397 and into the seventh fluid line 214 and to the tank 202.

Also, the air eventually flows into a section 211 of the third fluid line 212 that is located between the filter arrangement 102 and the ninth valve 246. Milk product in the ninth valve 246 and in section 211 then flows, due to gravity, past the eighth valve 282, past the second connection point 396, the seventh valve 278, the second connection point 398, past the second pump 274, to the third connection point 397 and into the seventh fluid line 214 and to the tank 202.

A similar situation applies to a fluid line 219 that runs from the ninth valve 246 and to a fourth connection point 399 that is located in the seventh fluid line 214. This fluid line 219 may be used for cleaning of the system 100. Milk product in fluid line 219 then flows, due to gravity, to the fourth connection point 399 and into the seventh fluid line 214 and the tank 202. In order to regulate the flow rate of the drained milk product MP an eleventh valve 226 may be provided in the seventh fluid line 214. The eleventh valve 226 may be provided in vicinity to the tank 202.

When air enters the third valve 256 all valves in the valve battery 250 are opened such that air is allowed to flow into sections of the first fluid line 208 and third fluid line 212 not yet drained. These fluid line sections are then drained from milk product, which flows directly to the tank, in respective directions from the valves in the valve battery 250 to the tank 202.

In Fig. 2c, an example of a second draining mode of the system 100 is illustrated. The second draining mode is arranged to drain the system 100 by using permeate P collected during the production mode.

The system 100 is then drained by feeding a part of permeate P from the balance tank 106 to the filtering device 102 via an eighth fluid line 224. In order for the part of the permeate P to be fed from the permeate tank 106 to the filtering device 102, a fourth pump 265 is arranged in the eighth fluid line 224. A twelfth valve 262 is provided in the eighth fluid line 224 and is arranged to regulate the flow rate of the permeate P. The permeate P is fed to the top of the filtering device 102, at the same location as the air A is fed into the filtering arrangement 102, as described in connection with Fig. 2b. The permeate P then flows into the filtering device 102 in order to drain milk product MP that might remain in the filtering device 102. The milk product MP is then emptied from the filtering device 102 to the tank 202 following the same fluid path as the air A does, as described in connection with Fig. 2b. The second draining mode may be performed after the first draining mode.

With reference to Fig. 2a-c, in addition to what have been discussed above, the system 100 may also comprise fluid lines forming a cleaning in place (CIP) system arranged for cleaning the system 100. The cleaning of the system 100 may comprise flushing water and CIP chemicals through the fluid lines and the devices arranged in the system 100. For this purpose a ninth fluid line 218 may be arranged to flush water through the system 100. A CIP dosing agent may be provided in the system 100 via a tenth fluid line 220. An external CIP agent may be provided in the system 100 via an eleventh fluid line 222. Additional CIP lines like fluid line 223 may be provided. Various pumps valve and valves (not shown) are included in CIP lines 218, 220, 222, 223 for accomplishing the CIP. A CIP agent may also be provided into the system via the external product line 206.

The cleaning process of the system 100 may comprise flushing water in the fluid lines and the devices in the system 100. Thereafter, the CIP agent may be provided into system 100. After the CIP agent may have been provided into the system 100, the system 100 may be provided with flushed water again in order to remove all of the CIP agent. This may be repeated until the system 100 is clean.

By having the filtering device 102 inclined at an angle, the filtering device 102 may be easier and more efficiently to drained. By draining the system 100 before cleaning it increases a recovering degree of the milk product MP having the high concentration of the substance. By the present method, a combination of gravitational force and air flow and/or permeate flow improves the draining of the system 100 without challenging the durability of the system 100. Thus, this arrangement of the system 100 allows to drain as much as possible of the milk product MP and therefore, reduces the product losses in the system 100 compared to standard production flush procedure. After draining by using air the system 100 might be filled with liquid (water), in particular if the filtering arrangement 102 is sensitive to drying out.

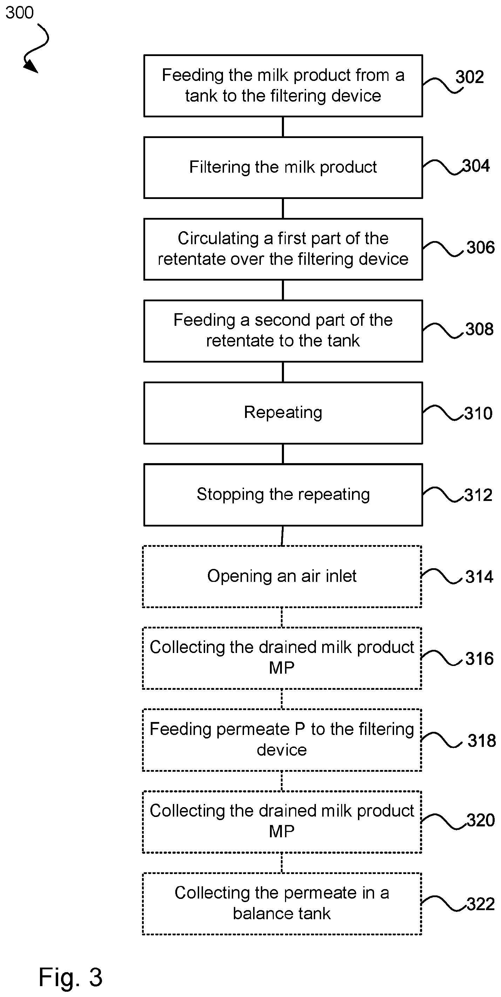

Fig. 3 illustrates a method 300 for concentrating a substance in a milk product MP. The method is described with reference to the system 100 of Figs 2a-2c.

In a first step 302 the milk product MP is fed from the tank 202 to the filtering device 102. The filtering device 102 is, as seen relatively the direction 702 from a milk product MP inlet 111 of the filtering device 102 to a retentate outlet 112 of the filtering device 102, inclined by an angle 703 of at least 30° or 45° relatively a horizontal direction 701. The filtering device 102 may be, as seen relatively a longitudinal direction 702 of the filtering device 102, inclined by an angle 703 of at least 30° or 45° relatively the horizontal direction 701. In a second step 304, the milk product MP is filtered in the filtering device 102, into a permeate P and a retentate R, such that the substance is concentrated in the retentate R. In a third step 306, a first part R1 of the retentate R is circulated over the filtering device 102 by feeding it to the filtering device 102 such as it forms part of the milk product MP. The first part R1 of the retentate R may comprise 70-90% of the retentate R that is filtered in (exits) the filtering device 102. In a fourth step 308, a second part R2 of the retentate is fed to the tank 202 such that it forms part of the milk product MP. In a fifth step 310, the first step 302 to the fourth step 308 are repeated. By repeating the steps, the concentration of the substance in the milk product MP is gradually increased. In a sixth step 312, the repeating step 310 is stopped when the concentration of the substance in the milk product MP has reached a predetermined value.

In a seventh step 314, the air inlet 104 may be opened to let in air A in the filtering device 102. The filtering device 102 is arranged such that milk product MP held in the filtering device 102 is emptied by gravitational force when the air A flows into the filtering device.

In an eighth step 316, the milk product MP emptied from the filtering device 102 is collected.

In a ninth step 318, a part of the permeate P may be fed into the filtering device 102, such that milk product MP held in the filtering device 102 is pushed put by the permeate P when the permeate P flows into the filtering device 102. In a tenth step 320, the milk product MP pushed out from the filtering device 102 is collected.

In an eleventh step 322, the permeate P is fed to a permeate tank 106 or to a drain via a fourth fluid line 210.

From the description above follows that, although various embodiments of the invention have been described and shown, the invention is not restricted thereto, but may also be embodied in other ways within the scope of the subject-matter defined in the following claims.

## Claims

1. A method (300) for concentrating a substance in a milk product (MP), the method (300) comprising the steps of:
a) feeding (302) the milk product (MP) from a tank (202) to a filtering device (102),
b) filtering (304), in the filtering device (102), the milk product (MP) into a permeate (P) and a retentate (R), such that the substance is concentrated in the retentate (R),
c) circulating (306) a first part (R1) of the retentate (R) over the filtering device (102) by feeding it to the filtering device (102) such that it forms part of the milk product (MP),
d) feeding (308) a second part (R2) of the retentate (R) to the tank (202) such that it forms part of the milk product (MP),
e) repeating (310) steps a) to d), to thereby gradually increase a concentration of the substance in the milk product (MP), and
f) stopping (312) the repeating (310) when the concentration of the substance in the milk product (MP) has reached a predetermined value, **characterized by** further comprising, after stopping (312) the repeating (310),
- opening (314) an air valve (104) to let in air (A) in the filtering device (102), which is arranged such that milk product (MP) held in the filtering device (102) is emptied by gravitational force when the air (A) flows into the filtering device (102), and
- collecting (316) the milk product (MP) emptied from the filtering device (102).

2. The method (300) according to claim 1, comprising letting the air
enter a section (209) of a first fluid line (208) that is arranged for the feeding (302) of the milk product (MP) to the filtering device (102), and
enter a section (211) of a third fluid line (212) that is arranged for the feeding (308) of the second part (R2) of the retentate (R) to the tank (202), such that
milk product (MP) held in said sections (209, 211) are emptied by gravitational force when the air (A) flows into said sections (209, 211), and
collecting the milk product (MP) emptied from said sections (209, 211).

3. The method (300) according to any one of the preceding claims, comprising,
after stopping (312) the repeating (310),
feeding (318) a part of the permeate (P) into the filtering device (102), such that milk product (MP) held in the filtering device (102) is pushed out by the permeate (P) when the permeate (P) flows into the filtering device (102), and
collecting (320) the milk product (MP) pushed out from the filtering device (102).

4. The method (300) according to any one of the preceding claims, wherein the first part of the retentate (R1) comprises 70-90% of the retentate (R) that is filtered in the filtering device (102).

5. The method (300) according to any one of the preceding claims, wherein the filtering device (102) comprises a membrane filter.

6. The method (300) according to any one of the preceding claims, wherein the filtering device (102) is, as seen relatively a direction (702) from a milk product (MP) inlet (111) of the filtering device (102) to a retentate outlet (112) of the filtering device (102), inclined by an angle (703) of
- at least 30° relatively the horizontal direction (701), or
- at least 45° relatively the horizontal direction (701).

7. The method (300) according to any one of the preceding claims, wherein the filtering device (102) is, as seen relatively a longitudinal direction (702) of the filtering device (102), inclined by an angle (703) of
- at least 30° relatively the horizontal direction (701), or
- at least 45° relatively the horizontal direction (701).

8. The method (300) according to any one of the preceding claims, comprising feeding (322), via a fourth fluid line (210), the permeate (P) to a balance tank (106) or to a drain.

9. The method (300) according to any one of the preceding claims, wherein the substance is Lactoferrin.

10. A system (100) configured to concentrating a substance in a milk product (MP), the system (100) comprising:
a) a first pump (230) and a first fluid line (208) arranged to feed the milk product (MP) from a tank (202) to a filtering device (102),
b) a filtering device (102) arranged to filter the milk product (MP) into a permeate (P) and a retentate (R), such that the substance is concentrated in the retentate (R),
c) a second fluid line (217) arranged to circulate a first part (R1) of the retentate (R) over the filtering device (102) by feeding it to the filtering device (102) such that it forms part of the milk product (MP),
d) a third fluid line (212) arranged to feed a second part (R2) of the retentate (R) to the tank (202) such that it forms part of the milk product (MP), and
e) a processing unit configured to
- monitor a gradual increase of a concentration of the substance in the milk product (MP), and
- stop the pump (230) and thereby the filtering of the milk product (MP) when the concentration of the substance in the milk product (MP) has reached a predetermined value, **characterized by**
f) the system being configured to
- open an air valve (104) to let in air (A) in the filtering device (102), which is arranged such that milk product (MP) held in the filtering device (102) is emptied by gravitational force when the air (A) flows into the filtering device (102), and
- collect (316) the milk product (MP) emptied from the filtering device (102).

11. The system (100) according claim 10, wherein the filtering device (102) is, as seen relatively a direction (702) from a milk product (MP) inlet (111) of the filter device (102) to a retentate outlet (112) of the filter device (102), inclined by an angle (703) of
- at least 30° relatively the horizontal direction (701), or
- at least 45° relatively the horizontal direction (701).

12. The system (100) according to claim 10 or 11, wherein the filtering device (102) is, as seen relatively a longitudinal direction (702) of the filter arrangement (102), inclined by an angle (703) of
- at least 30° relatively the horizontal direction (701), or
- at least 45° relatively the horizontal direction (701).

## Patentansprüche

1. Verfahren (300) zum Konzentrieren einer Substanz in einem Milchprodukt (MP), wobei das Verfahren (300) die folgenden Schritte umfasst:
a) Zuführen (302) des Milchprodukts (MP) aus einem Tank (202) zu einer Filtervorrichtung (102),
b) Filtrieren (304) des Milchprodukts (MP) in der Filtervorrichtung (102) in ein Permeat (P) und ein Retentat (R), so dass die Substanz im Retentat (R) konzentriert wird,
c) Zirkulieren (306) eines ersten Teils (R1) des Retentats (R) über die Filtervorrichtung (102), indem er der Filtervorrichtung (102) zugeführt wird, so dass er einen Teil des Milchprodukts (MP) bildet,
d) Zuführen (308) eines zweiten Teils (R2) des Retentats (R) in den Tank (202), so dass er einen Teil des Milchprodukts (MP) bildet,
e) Wiederholen (310) der Schritte a) bis d), um dadurch allmählich eine Konzentration der Substanz im Milchprodukt (MP) zu erhöhen, und
f) Stoppen (312) des Wiederholens (310), wenn die Konzentration der Substanz in dem Milchprodukt (MP) einen vorbestimmten Wert erreicht hat, **dadurch gekennzeichnet, dass** es nach Stoppen (312) des Wiederholens (310) ferner Folgendes umfasst:
- Öffnen (314) eines Luftventils (104) zum Einlassen von Luft (A) in die Filtervorrichtung (102), die so angeordnet ist, dass in der Filtervorrichtung (102) gehaltenes Milchprodukt (MP) durch Schwerkraft entleert wird, wenn die Luft (A) in die Filtervorrichtung (102) strömt, und
- Sammeln (316) des aus der Filtervorrichtung (102) entleerten Milchprodukts (MP).

2. Verfahren (300) nach Anspruch 1, das umfasst, Luft:
in einen Abschnitt (209) einer ersten Fluidleitung (208) eintreten zu lassen, die zum Zuführen (302) des Milchprodukts (MP) zu der Filtervorrichtung (102) angeordnet ist, und
in einen Abschnitt (211) einer dritten Fluidleitung (212) eintreten zu lassen, die zum Zuführen (308) des zweiten Teils (R2) des Retentats (R) zum Tank (202) angeordnet ist, so dass
in den Abschnitten (209, 211) gehaltenes Milchprodukt (MP) durch Schwerkraft entleert wird, wenn die Luft (A) in die Abschnitte (209, 211) strömt, und
Sammeln des aus den genannten Abschnitten (209, 211) entleerten Milchprodukts (MP).

3. Verfahren (300) nach einem der vorhergehenden Ansprüche, umfassend, nach dem Stoppen (312) des Wiederholens (310),
Zuführen (318) eines Teils des Permeats (P) in die Filtereinrichtung (102), so dass in der Filtereinrichtung (102) gehaltenes Milchprodukt (MP) durch das Permeat (P) herausgedrückt wird, wenn das Permeat (P) in die Filtereinrichtung (102) fließt, und
Sammeln (320) des aus der Filtereinrichtung (102) herausgedrückten Milchprodukts (MP).

4. Verfahren (300) nach einem der vorhergehenden Ansprüche, wobei der erste Teil des Retentats (R1) 70-90% des Retentats (R) umfasst, das in der Filtervorrichtung (102) gefiltert wird.

5. Verfahren (300) nach einem der vorhergehenden Ansprüche, wobei die Filtervorrichtung (102) einen Membranfilter umfasst.

6. Verfahren (300) nach einem der vorhergehenden Ansprüche, wobei die Filtervorrichtung (102), bezogen auf eine Richtung (702) von einem Milchprodukt- bzw. MP-Einlass (111) der Filtervorrichtung (102) zu einem Retentatauslass (112) der Filtervorrichtung (102) um einen Winkel (703) geneigt ist von
- mindestens 30° relativ zur horizontalen Richtung (701), oder
- mindestens 45° relativ zur horizontalen Richtung (701).

7. Verfahren (300) nach einem der vorhergehenden Ansprüche, wobei die Filtervorrichtung (102), bezogen auf eine Längsrichtung (702) der Filtervorrichtung (102), um einen Winkel (703) geneigt ist von
- mindestens 30° relativ zur horizontalen Richtung (701), oder
- mindestens 45° relativ zur horizontalen Richtung (701).

8. Verfahren (300) nach einem der vorhergehenden Ansprüche, umfassend Zuführen (322) des Permeats (P) über eine vierte Fluidleitung (210) zu einem Ausgleichsbehälter (106) oder zu einem Ablauf.

9. Verfahren (300) nach einem der vorhergehenden Ansprüche, wobei die Substanz Lactoferrin ist.

10. System (100), ausgelegt zum Konzentrieren einer Substanz in einem Milchprodukt (MP), wobei das System (100) Folgendes umfasst:
a) eine erste Pumpe (230) und eine erste Fluidleitung (208), die angeordnet sind, um das Milchprodukt (MP) aus einem Tank (202) einer Filtervorrichtung (102) zuzuführen,
b) eine Filtervorrichtung (102), angeordnet zum Filtrieren des Milchprodukts (MP) in ein Permeat (P) und ein Retentat (R), sodass die Substanz im Retentat (R) konzentriert wird,
c) eine zweite Fluidleitung (217), angeordnet zum Zirkulieren eines ersten Teils (R1) des Retentats (R) über die Filtervorrichtung (102), indem er der Filtervorrichtung (102) zugeführt wird, so dass er einen Teil des Milchprodukts (MP) bildet,
d) eine dritte Fluidleitung (212), angeordnet zum Zuführen eines zweiten Teils (R2) des Retentats (R) in den Tank (202), so dass er einen Teil des Milchprodukts (MP) bildet, und
e) eine Verarbeitungseinheit, ausgelegt zum
- Überwachen einer allmählichen Erhöhung der Konzentration der Substanz im Milchprodukt (MP) und
- Stoppen der Pumpe (230) und damit der Filterung des Milchprodukts (MP), wenn die Konzentration der Substanz im Milchprodukt (MP) einen vorbestimmten Wert erreicht hat, **dadurch gekennzeichnet, dass**
f) das System ausgelegt ist zum
- Öffnen eines Luftventils (104) zum Einlassen von Luft (A) in die Filtervorrichtung (102), die so angeordnet ist, dass in der Filtervorrichtung (102) gehaltenes Milchprodukt (MP) durch Schwerkraft entleert wird, wenn die Luft (A) in die Filtervorrichtung (102) strömt, und
- Sammeln (316) des aus der Filtervorrichtung (102) entleerten Milchprodukts (MP).

11. System (100) nach Anspruch 10, wobei die Filtervorrichtung (102), bezogen auf eine Richtung (702) von einem Milchprodukt- bzw. MP-Einlass (111) der Filtervorrichtung (102) zu einem Retentatauslass (112) der Filtervorrichtung (102), um einen Winkel (703) geneigt ist von
- mindestens 30° relativ zur horizontalen Richtung (701), oder
- mindestens 45° relativ zur horizontalen Richtung (701).

12. System (100) nach Anspruch 10 oder 11, wobei die Filtervorrichtung (102), bezogen auf eine Längsrichtung (702) der Filteranordnung (102), um einen Winkel (703) geneigt ist von
- mindestens 30° relativ zur horizontalen Richtung (701), oder
- mindestens 45° relativ zur horizontalen Richtung (701).

## Revendications

1. Procédé (300) de concentration d'une substance dans un produit laitier (MP), le procédé (300) comprenant les étapes suivantes :
a) acheminer (302) le produit laitier (MP) depuis un réservoir (202) jusqu'à un dispositif de filtration (102),
b) filtrer (304), dans le dispositif de filtration (102), le produit laitier (MP) de façon à obtenir un perméat (P) et un rétentat (R), de sorte que la substance soit concentrée dans le rétentat (R),
c) faire circuler (306) une première partie (R1) du rétentat (R) sur le dispositif de filtration (102) en l'acheminant au dispositif de filtration (102) de sorte qu'elle fasse partie du produit laitier (MP),
d) acheminer (308) une seconde partie (R2) du rétentat (R) au réservoir (202) de sorte qu'elle fasse partie du produit laitier (MP),
e) répéter (310) les étapes a) à d), pour ainsi augmenter progressivement une concentration de la substance dans le produit laitier (MP), et
f) arrêter (312) la répétition (310) lorsque la concentration de la substance dans le produit laitier (MP) a atteint une valeur prédéterminée, **caractérisé en ce qu'**il comprend en outre, après avoir arrêté (312) la répétition (310),
- ouvrir (314) une vanne à air (104) pour laisser entrer de l'air (A) dans le dispositif de filtration (102), celle-ci étant disposée de telle sorte que du produit laitier (MP) situé dans le dispositif de filtration (102) soit vidé par la force gravitationnelle lorsque l'air (A) s'écoule dans le dispositif de filtration (102), et
- collecter (316) le produit laitier (MP) vidé du dispositif de filtration (102).

2. Procédé (300) selon la revendication 1, comprenant :
laisser l'air
entrer dans une section (209) d'une première conduite de fluide (208) qui est disposée pour acheminer (302) le produit laitier (MP) au dispositif de filtration (102), et
entrer dans une section (211) d'une troisième conduite de fluide (212) qui est disposée pour acheminer (308) la seconde partie (R2) du rétentat (R) au réservoir (202), de telle sorte que
le produit laitier (MP) situé dans lesdites sections (209, 211) est vidé par la force gravitationnelle lorsque l'air (A) s'écoule dans lesdites sections (209, 211), et collecter le produit laitier (MP) vidé desdites sections (209, 211).

3. Procédé (300) selon l'une quelconque des revendications précédentes, comprenant, après avoir arrêté (312) la répétition (310),
acheminer (318) une partie du perméat (P) dans le dispositif de filtration (102), de telle sorte que le produit laitier (MP) situé dans le dispositif de filtration (102) soit expulsé par le perméat (P) lorsque le perméat (P) s'écoule dans le dispositif de filtration (102), et
collecter (320) le produit laitier (MP) expulsé du dispositif de filtration (102).

4. Procédé (300) selon l'une quelconque des revendications précédentes, dans lequel la première partie du rétentat (R1) comprend 70 à 90% du rétentat (R) qui est filtré dans le dispositif de filtration (102).

5. Procédé (300) selon l'une quelconque des revendications précédentes, dans lequel le dispositif de filtration (102) comprend un filtre à membrane.

6. Procédé (300) selon l'une quelconque des revendications précédentes, dans lequel le dispositif de filtration (102) est, relativement à une direction (702) allant d'une entrée (111) de produit laitier (MP) du dispositif de filtration (102) à une sortie (112) de rétentat du dispositif de filtration (102), incliné d'un angle (703) de
- au moins 30° relativement la direction horizontale (701), ou
- au moins 45° relativement la direction horizontale (701).

7. Procédé (300) selon l'une quelconque des revendications précédentes, dans lequel le dispositif de filtration (102) est, relativement à une direction longitudinale (702) du dispositif de filtration (102), incliné d'un angle (703) de
- au moins 30° relativement la direction horizontale (701), ou
- au moins 45° relativement la direction horizontale (701).

8. Procédé (300) selon l'une quelconque des revendications précédentes, comprenant le fait d'acheminer (322), par l'intermédiaire d'une quatrième conduite de fluide (210), le perméat (P) à un réservoir d'équilibrage (106) ou à un orifice d'évacuation.

9. Procédé (300) selon l'une quelconque des revendications précédentes, dans lequel la substance est la lactoferrine.

10. Système (100) configuré pour concentrer une substance dans un produit laitier (MP), le système (100) comportant :
a) une première pompe (230) et une première conduite de fluide (208) conçues pour acheminer le produit laitier (MP) depuis un réservoir (202) jusqu'à un dispositif de filtration (102),
b) un dispositif de filtration (102) conçu pour filtrer le produit laitier (MP) de façon à obtenir un perméat (P) et un rétentat (R), de sorte que la substance soit concentrée dans le rétentat (R),
c) une deuxième conduite de fluide (217) conçue pour faire circuler une première partie (R1) du rétentat (R) sur le dispositif de filtration (102) en l'acheminant au dispositif de filtration (102) de sorte qu'elle fasse partie du produit laitier (MP),
d) une troisième conduite de fluide (212) conçue pour acheminer une seconde partie (R2) du rétentat (R) au réservoir (202) de sorte qu'elle fasse partie du produit laitier (MP), et
e) une unité de traitement configurée pour
- surveiller une augmentation progressive d'une concentration de la substance dans le produit laitier (MP), et
- arrêter la pompe (230) et ainsi la filtration du produit laitier (MP) lorsque la concentration de la substance dans le produit laitier (MP) a atteint une valeur prédéterminée, **caractérisé en ce que**
f) le système est configuré pour
- ouvrir une vanne à air (104) pour laisser entrer de l'air (A) dans le dispositif de filtration (102), celle-ci étant disposée de telle sorte que du produit laitier (MP) situé dans le dispositif de filtration (102) soit vidé par la force gravitationnelle lorsque l'air (A) s'écoule dans le dispositif de filtration (102), et
- collecter (316) le produit laitier (MP) vidé du dispositif de filtration (102).

11. Système (100) selon la revendication 10, dans lequel le dispositif de filtration (102) est, relativement à une direction (702) allant d'une entrée (111) de produit laitier (MP) du dispositif de filtration (102) à une sortie (112) de rétentat du dispositif de filtration (102), incliné d'un angle (703) de
- au moins 30° relativement la direction horizontale (701), ou
- au moins 45° relativement la direction horizontale (701).

12. Système (100) selon la revendication 10 ou 11, dans lequel le dispositif de filtration (102) est, relativement à une direction longitudinale (702) du dispositif de filtration (102), incliné d'un angle (703) de
- au moins 30° relativement la direction horizontale (701), ou
- au moins 45° relativement la direction horizontale (701).
